# EUROPÄISCHE PATENTSCHRIFT

(11) **EP 3 202 246 B1**
(45) Veröffentlichungstag und Bekanntmachung des Hinweises auf die Patenterteilung: **19.06.2019**
(21) Anmeldenummer: 17401005.8
(22) Anmeldetag: 23.01.2017
(51) Int. Cl.: A01B 76/00

(54) **LANDWIRTSCHAFTLICHE MASCHINE**
AGRICULTURAL MACHINE
ENGIN AGRICOLE

(30) Priorität: 25.01.2016 DE 102016101189
(43) Veröffentlichungstag der Anmeldung: 09.08.2017
(73) Patentinhaber: Amazonen-Werke H. Dreyer GmbH & Co. KG, 49205 Hasbergen (DE)
(72) Erfinder: Rahe, Florian, 49504 Lotte (DE)

(56) Entgegenhaltungen:
- EP-A1- 2 787 480
- WO-A1-2014/186041
- WO-A1-2015/147149
- DE-A1-102004 054 749
- US-A- 6 070 673
- US-A1- 2013 021 174
- US-A1- 2015 373 905

## Beschreibung

Die Erfindung betrifft eine landwirtschaftliche Maschine gemäß des Oberbegriffes des Patentanspruches 1.

Eine Vielzahl von landwirtschaftlichen Maschinen verfügt heutzutage über elektronische Steuerungs- und Assistenzsysteme. Sieht man einmal von den Bodenbearbeitungsmaschinen ab, sind diese eigentlich bei allen modernen Maschinen zu finden. Hierzu zählen beispielsweise Erntemaschinen, Sämaschinen, Pflanzenschutzspritzen und Düngersteuer. Auch bei Bodenbearbeitungsmaschinen werden elektronische Systeme zunehmend verwendet. So können Pflüge bereits heute vollautomatisch eingestellt werden oder mit Sensoren ausgestattete Bodenbearbeitungsmaschinen auf äußere Einflüsse reagieren.

So zeigen beispielsweise die DE 10 2004 054 749 A1 und die US 2015 0 373 905 A1 landwirtschaftliche Maschinen, welche mit Sensoren ausgestattet sind. Es werden zudem Methoden beschrieben, die vorhandenen Sensoren auszulesen. In der EP 2 787 480 A1 und die US 6 070 673 A befassen sich mit mit der Bereitstellung von ermittelten Daten, die die Maschine oder einen Arbeitsvorgang betreffen. Die WO 2015 147 147 A1 beschreibt die Möglichkeit, eine landwirtschaftliche Maschine fernzusteuern und die WO 2014 186 041 A1 offenbart, wie sich das elektronische System einer landwirtschaftlichen Maschine mit einem Drahtlosnetzwerk verbinden lässt.

Nachteilig bei den bekannten landwirtschaftlichen Maschinen mit elektronischen Steuerungs- und Assistenzsystemen ist, dass die elektronisch aufgezeichneten und gespeicherten Informationen bei abgeschalteter Maschine nicht zugänglich sind.

Dies betrifft insbesondere angehängte oder angebaute Geräte, welche nicht über eine autonome und vom Schlepper unabhängige Energieversorgung verfügen. Bei diesen kann im Allgemeinen nicht ohne Zugriff auf die Schlepperenergieversorgung auf Daten zugegriffen werden, welche beispielsweise im Speicher eines Jobrechners abgelegt sind.

Aufgabe der vorliegenden Erfindung ist es daher Informationen den Betrieb oder den Status einer landwirtschaftlichen Maschine betreffend auch bei Nichtbetrieb dieser Maschine zugänglich zu machen.

Diese Aufgabe wird in erfindungsgemäßer Weise durch den Oberbegriff des Patentanspruchs 1 gelöst, indem durch eine Datenverarbeitungseinrichtung, vorzugsweise einen Jobrechner, auf eine an der Maschine angeordnete drahtlos auslesbare, als Tag ausgebildete elektronische Einheit mittels einer drahtlosen oder drahtgebundenen Verbindung Informationen übertragbar sind und die elektronische Einheit über eine batteriegespeiste Energieversorgung verfügt und hierdurch bei Nichtbetrieb der landwirtschaftlichen Maschine drahtlos auslesbar ausgebildet ist. Auf diese Weise können sehr einfach die relevanten Informationen auf eine separate elektronische Einheit übertragen und diese im Bedarfsfall aufgrund der batteriegestützten Stromversorgung der elektronischen Einheit ausgelesen werden. Das Auslesen kann hierbei leitungsgebunden oder drahtlose erfolgen.

In einer vorteilhaften Weiterbildung der Erfindung wird die batteriegespeiste Energieversorgung der elektronischen Einheit während des Betriebs der landwirtschaftlichen Maschine mittels einer elektrischen Verbindung zum Energiesystem der landwirtschaftlichen Maschine durch dieses aufgeladen. Hierdurch wird vermieden dass aufgrund leerer oder verbrauchter Batterien ein Auslesen der gewünschten Informationen scheitert. Vielmehr werden bei jedem Betrieb der landwirtschaftlichen Maschine die elektronische Einheit und deren wieder aufladbarer Akku mit Energie versorgt.

Nach der Erfindung wird die batteriegespeiste Energieversorgung mittels Energy-Harvesting aufgeladen. Beim Energy-Harvesting wird Energie für kleine elektronische Einheiten aus den am Ort der Einheit vorhandenen Energiequellen gewonnen. Dies kann beispielsweise Bewegungsenergie, thermische Energie, solare Energie oder Energie elektromagnetischer Strahlung sein. Durch diese Technik werden elektrische Leitungen zur Verbindung mit dem Energiesystem der landwirtschaftlichen Maschine eingespart und somit eine flexiblere Wahl des Ortes der elektronischen Einheit an der Maschine ermöglicht. Diese kann somit an leicht zugänglichen Orten der Maschine, beispielsweise an außenliegenden Verkleidungsteilen, angebracht werden. Es muss keine Rücksicht genommen werden, dass Zugriff auf die Energieversorgung der landwirtschaftlichen Maschine am jeweiligen Ort besteht. Auch ist eine solche Vorgehensweise vorteilhaft bei Maschinen die nicht über ein elektrisches Bordnetz verfügen, wie dies beispielsweise bei Bodenbearbeitungsmaschinen der Fall sein kann.

In einer Ausgestaltung der Erfindung werden Daten von der elektronischen Einheit mittels NFC und/oder Bluetooth-Low-Energy und/oder iBeacon ausgelesen. Diese Techniken sind sehr vorteilhaft anwendbar zur drahtlosen Übertragung von Informationen im Nahbereich, da diese elektronischen Einheiten oder Tags sehr klein, günstig, unempfindlich gegenüber Verunreinigungen und durch ihre autonome Energieversorgung flexibel handhabbar sind.

Bei den zur Verfügung gestellten Informationen der landwirtschaftlichen Maschine kann es sich beispielsweise um eine oder mehrere der folgenden handeln: Anzahl der Betriebsstunden der landwirtschaftlichen Maschine, bearbeitete Fläche, Einstellparameter und Applikationsdaten der Maschine, Wartungsinformationen, Handbuch, Wartungsanweisungen, Informationen über anstehende Wartungen und Reparaturen, benötigte Wartungs-und Ersatzteile, Fehlermeldungen, Wetter- und Umgebungsdaten. Die elektronische Einheit kann hierzu ergänzend auch mit einem GPS-Empfänger ausgestattet sein oder auf ein GPS-Signal Zugriff haben.

Denkbar ist auch, dass die Informationen oder Teile davon nicht allgemein verfügbar sind, sondern zum Abrufen dieser entsprechende Passwörter oder Signaturen übertragen werden müssen. Dies ist insbesondere auch relevant, wenn von außen Informationen, welche auf der elektronischen Einheit gespeichert sind, ergänzt oder überschrieben werden sollen.

Die Informationen können mit einem geeigneten Lesegerät, einem Terminal, einem Laptop, einem Tablet, einem Smartphone oder einer sonstigen geeigneten Vorrichtung abgerufen werden.

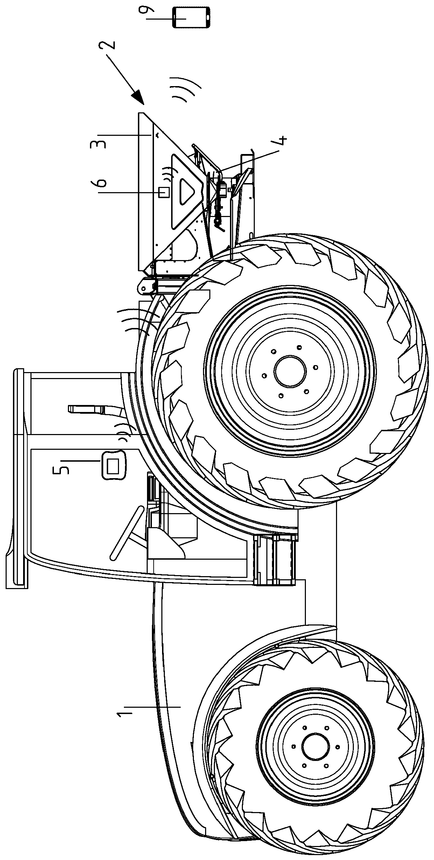

Weitere Einzelheiten der Erfindung sind der Beispielsbeschreibung zu entnehmen. Die Zeichnung zeigt
eine beispielhafte landwirtschaftliche Verteilmaschine, ausgebildet als Schleuderstreuer, mit einer erfindungsgemäßen elektronischen Einheit angehängt an einen Schlepper.

Eine beispielhafte landwirtschaftliche Verteilmaschine, als Schleuderstreuer 2, angehängt an einen Schlepper 1 ist in der Figur gezeigt. Der Schleudersteuer verfügt über einen Vorratstank 3 zur Aufbewahrung des auszubringen Guts und zur Verteilung über Schleuderscheiben 4. In der Kabine des Schleppers 1 befindet sich ein Terminal 5 zur Steuerung und Überwachung der Funktionen und des Betriebs des Schleuderstreuers 2. Das Terminal 5 kann über entsprechende Anzeige- und Bedienelemente verfügen.

Am Schleudersteuer 2 ist ein Tag 6 angebracht. Hierbei kann es sich beispielsweise um ein NFC, BLE- oder iBeacon-Tag handeln. Dieses Tag 6 ist in diesem Fall an der Außenseite des Vorratsbehälters des Düngerstreuers angebracht. Das Tag verfügt zumindest über einen Datenspeicher, eine batteriegespeiste Energieversorgung sowie über eine Vorrichtung zur Übertragung von Daten, Informationen oder Parametern.

Während des Betriebs des Verteilmaschine werden nun Daten von einem Terminal 5 oder nicht dargestellten Jobrechner der Verteilmaschine an das Tag 6 übermittelt und dort gespeichert. Diese Übertragung kann wie hier dargestellt mittels einer drahtlosen Verbindung oder auch leitungsgebunden erfolgen. Bei den Daten kann es sich beispielsweise um eine oder mehrere der folgenden Informationen handeln: die Betriebsdauer, die bearbeitete Fläche, die Art des ausgebrachten Gutes, die ausgebrachte Menge oder Rate, die Temperatur oder sonstige Wetterdaten, die Einstellparameter der Maschine oder Informationen über anstehende Wartungen oder auch Fehlermeldungen. Es können auch direkt durch das Tag 6 Daten erhoben werden, beispielsweise könnte eine Temperatur gemessen oder sonstige Sensordaten gespeichert werden. Für die Übertragung der Daten kann es eine leitungsgebundene Verbindung zu dem Jobrechner oder dem Terminal geben. Die Daten können jedoch auch drahtlos übermittelt werden.

Diese Daten sind auch nach dem Ende des Verteilprozesses von dem Tag 6 abrufbar. So können auch nach dem Abstellen des Schleudersteuers 2 und dem Abkoppeln von dem Schlepper 1 noch benötigte Informationen von dem Tag 6 abgerufen werden. Informationen über den letzten Arbeitsvorgang können beispielsweise auf einen Hofrechner übertragen werden oder Informationen über einen anstehenden Wartungsvorgang, wie beispielsweise benötigte Ersatzteile oder eine Wartungsanleitung direkt am Schleuderstreuer 2 drahtlos abgerufen und gegebenenfalls auf einem Smartphone 9 oder Tablet angezeigt werden.

Ebenfalls ist es denkbar Daten auf dem Tag 6 zur späteren Verwendung zu speichern oder zu überschreiben. Hierbei kann es sich beispielsweise um Restmengen des auszubringen Guts, Orte, Zeiten oder bearbeitete Flächen handeln. Auch angepasste Einstellempfehlungen können auf dem Tag 6 zur späteren Verwendung hinterlegt werden. Für das Überschreiben oder Speichern von Daten kann hierbei eine Sicherheitsabfrage, beispielsweise die Übermittlung einer entsprechenden Signatur oder die Eingabe eines Passworts, vorgesehen sein. Das hier dargestellte Tag 6 an der Außenseite des Vorratsbehälters ist nicht über eine Leitung in ein Bordnetz der Verteilmaschine eingebunden. Die Energieversorgung eines Akkus des Tags 6 erfolgt über das Energy-Harvesting verfahren, indem beispielsweise Erschütterungen der Verteilmaschine oder Sonnenstrahlen in Energie umgewandelt werden.

Eine Verwendung des Tags auch bei anderen landwirtschaftlichen Maschinen, wie Pflanzenschutzspritzen und Sämaschinen ist denkbar. Besonders vorteilhaft ist eine Verwendung eines solchen Tags bei Maschinen, welche nicht über ein eigenes Bordelektroniknetz verfügen, wie typischerweise Bodenbearbeitungsmaschinen.

## Patentansprüche

1. Landwirtschaftliche Maschine (2) mit einer Datenverarbeitungseinrichtung (5), vorzugsweise einem Jobrechner, zur Verarbeitung und/oder Speicherung von maschinenrelevanten Informationen,
wobei
durch die Datenverarbeitungseinrichtung (5) auf eine an der Maschine (2) angeordnete drahtlos auslesbare, als Tag ausgebildete elektronische Einheit (6) mittels einer drahtlosen oder drahtgebundenen Verbindung Informationen übertragbar sind und wobei die elektronische Einheit (6) über eine batteriegespeiste Energieversorgung verfügt und hierdurch bei Nichtbetrieb der landwirtschaftlichen Maschine drahtlos auslesbar ausgebildet ist
**dadurch gekennzeichnet, dass**
die batteriegespeiste Energieversorgung mittels Energy-Harvesting aufladbar ausgebildet ist.

2. Landwirtschaftliche Maschine nach Anspruch 1, **dadurch gekennzeichnet, dass** die batteriegespeiste Energieversorgung der elektronischen Einheit (6) während des Betriebs der landwirtschaftlichen Maschine (2) mittels einer elektrischen Verbindung zum Energiesystem der landwirtschaftlichen Maschine (2) durch dieses aufladbar ist.

3. Landwirtschaftliche Maschine nach Anspruch 1 oder 2, **dadurch gekennzeichnet, dass** Daten von der elektronischen Einheit (6) mittels NFC und/oder Bluetooth-Low-Energy und/oder iBeacon auslesbar sind.

## Claims

1. Agricultural machine (2) having a data processing device (5), in particular a job computer, for processing and/or storing machine-relevant information,
it being possible for information to be transmitted by the data processing device (5) by means of a wire-free or wired connection to a wirelessly readable electronic unit (6) formed as a tag and arranged on the machine (2), and the electronic unit (6) having a battery-fed power supply and, in this way, being designed to be wirelessly readable when the agricultural machine is not operating,
**characterized in that**
the battery-fed power supply is designed to be chargeable by means of energy harvesting.

2. Agricultural machine according to Claim 1, **characterized in that** during the operation of the agricultural machine (2), the battery-fed power supply of the electronic unit (6) is chargeable by the power system of the agricultural machine (2) by means of an electrical connection to the said power system of the agricultural machine (3).

3. Agricultural machine according to Claim 1 or 2, **characterized in that** data can be read from the electronic unit (6) by means of NFC and/or Bluetooth low energy and/or iBeacon.

## Revendications

1. Machine agricole (2) comprenant un dispositif de traitement de données (5), de préférence un ordinateur de tâche, destiné à traiter et/ou à enregistrer des informations relatives à la machine,
des informations pouvant être transmises par le dispositif de traitement de données (5), au moyen d'une liaison de données sans fil ou filaire, sur une unité électronique (6) réalisée sous la forme d'une balise et lisible sans fil, et l'unité électronique (6) disposant d'une source d'énergie alimentée par batterie et étant ainsi réalisée lisible sans fil lorsque la machine agricole n'est pas en fonctionnement,
**caractérisée en ce que**
la source d'énergie alimentée par batterie est réalisée pour être rechargeable au moyen de la récupération d'énergie.

2. Machine agricole selon la revendication 1, **caractérisée en ce que** la source d'énergie alimentée par batterie de l'unité électronique (6), pendant le fonctionnement de la machine agricole (2), peut être rechargée par le système d'énergie de la machine agricole (2) au moyen d'une liaison électrique vers celui-ci.

3. Machine agricole selon la revendication 1 ou 2, **caractérisée en ce que** les données de l'unité électronique (6) peuvent être lues au moyen de NFC et/ou Bluetooth à basse consommation et/ou iBeacon.
